# EUROPEAN PATENT APPLICATION

(11) **EP 4 459 228 A1**
(43) Date of publication of application: **06.11.2024**
(21) Application number: 22914076.9
(22) Date of filing: 06.12.2022
(51) Int. Cl.: G01C 21/00

(54) **COLLECTION METHOD AND APPARATUS FOR DATA FOR MOBILE ROBOT MAP CONSTRUCTION**

(30) Priority: 30.12.2021 CN 202111652063
(71) Applicant: Hangzhou Hikrobot Co., Ltd., Hangzhou, Zhejiang 310051 (CN)
(72) Inventor: LI, Jianyu, Hangzhou, Zhejiang 310051 (CN); WANG, Wei, Hangzhou, Zhejiang 310051 (CN); YI, Yuting, Hangzhou, Zhejiang 310051 (CN); DANG, Zhiqiang, Hangzhou, Zhejiang 310051 (CN); TANG, Hengbo, Hangzhou, Zhejiang 310051 (CN); SUN, Yuandong, Hangzhou, Zhejiang 310051 (CN)
(74) Representative: Dai, Simin
(86) International application number: PCT/CN2022/136829
(87) International publication number: WO 2023/124821

(57) **Abstract**

The present disclosure provides a method and apparatus for collecting data for constructing a mobile robot map, which is applied to a mobile robot. The method includes: obtaining a target key node, moving towards the target key node, collecting data from a sensor in the mobile robot during the moving, where the target key node is determined according to topological information, the topological information includes logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence; and determining a direction of the moving by using the guide markers during the moving, and determining a to-be-reached target key node by using the beacons without pose information of any of the key nodes and pose information of any of the beacons.

## Description

### CROSS-REFERENCE OF RELATED APPLICATIONS

This application claims priority to Chinese Patent Application No. 202111652063.1 filed on December 30, 2021, the entire content of which is incorporated herein by reference.

### TECHNICAL FIELD

The present disclosure relates to the field of machine vision, and in particular to a method for collecting data for constructing a mobile robot map.

### BACKGROUND

With the development of technology, whether it is visual navigation, laser navigation, inertial navigation, or the combination of various navigation methods, maps used for navigation and positioning of mobile robots are more and more automatically constructed. One of the ways to automatically construct a map is as follows: the mobile robot moves along the planned path to collect data for constructing the mobile robot map in real time during the moving process, and the map construction software constructs the map according to the collected data.

In the process of moving according to the planned path, the mobile robot needs to input preset pose information to form feedback on the moving process of the mobile robot, so as to appropriately intervene the moving process. At present, the preset pose information all depends on a lot of manual measurement work, for example, measuring the real pose of marker points in the selected scene area, or measuring the information used for calibrating the pose of markers, so that the robot may calibrate the current pose according to the markers in the moving process. On the one hand, these manual measurements consume a lot of measurement time, on the other hand, there is a manual measurement error, which is introduced into the constructed map, as a result, the accuracy of the constructed map is thus affected.

### SUMMARY

The present disclosure provides a method for collecting data for constructing a mobile robot map, to reduce the amount of manual involvement.

According to a first aspect of the present disclosure, there is provided a method for collecting data for constructing a mobile robot map, performed by a mobile robot, and including: obtaining a target key node, moving towards the target key node, collecting data from a sensor in the mobile robot during the moving, where the target key node is determined according to topological information, the topological information includes logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence; and determining a direction of the moving by using the guide markers during the moving, and determining a to-be-reached target key node by using the beacons without pose information of any of the key nodes and pose information of any of the beacons.

In an embodiment, the topological information further includes beacons corresponding to the topological points, and obtaining the target key node includes: obtaining a beacon of the target key node from map construction software, where the target key node is determined by the map construction software according to a planned path, the topological information and a topological point corresponding to a current key node reached by the mobile robot.

In an embodiment, determining the direction of the moving by using the guide markers during the moving, and determining the to-be-reached target key node by using the beacons without the pose information of any of the key nodes and the pose information of any of the beacons include: performing a mark detection by the mobile robot, when a guide marker is detected, moving according to the detected guide marker, when a beacon is detected, matching the detected beacon with a beacon of a current target key node from the map construction software, when the matching is successful, determining that the mobile robot has reached the current target key node, and requesting a next target key node from the map construction software, such that the map construction software sends a beacon of the next target key node to the mobile robot; or sending the detected beacon to the map construction software, such that the map construction software matches the detected beacon with the beacons corresponding to the topological points in the topological information, and when the matching is successful, obtaining a topological point corresponding to the detected beacon, and sending a beacon corresponding to a next topological point as the beacon of the next target key node to the mobile robot; where different beacons have different marking contents.

In an embodiment, the method further includes: obtaining, by the mobile robot, the topological information and a planned path from map construction software;

obtaining the target key node includes: based on the planned path, the topological information, and a topological point corresponding to a current key node reached by the mobile robot, determining, by the mobile robot, a target topological point, and determining a key node corresponding to the target topological point as the target key node.

In an embodiment, the topological information further includes beacons corresponding to the topological points, and determining the direction of the moving by using the guide markers during the moving, and determining the to-be-reached target key node by using the beacons without the pose information of any of the key nodes and the pose information of any of the beacons include: performing a mark detection by the mobile robot, when a guide marker is detected, moving according to the detected guide marker, when a beacon is detected, matching the detected beacon with the beacons corresponding to the topological points in the topological information, and when the matching is successful, determining that the mobile robot has reached the current target key node, and obtaining a next target key node; where different beacons have different marking contents.

In an embodiment, determining the direction of the moving by using the guide markers during the moving, and determining the to-be-reached target key node by using the beacons without the pose information of any of the key nodes and the pose information of any of the beacons include: performing a mark detection by the mobile robot, when a guide marker is detected, moving according to the detected guide marker, when a beacon is detected, based on a first distance recorded by an inertial odometer between the detected beacon and a detected previous adjacent beacon, determining whether the detected beacon is the same as the detected previous adjacent beacon, when the first distance is equal to a preset distance threshold, determining that the detected beacon is not the same as the detected previous adjacent beacon, and based on matching between an order of the detected beacon and the detected previous adjacent beacon and an order of adjacent topological points in the planned path, determining a topological point corresponding to the detected beacon, and obtaining a next target key node; where different beacons have the same marking content.

In an embodiment, the topological information further includes a second distance between two topological points with logical connection relationship, and the second distance is a measured distance between two key nodes respectively corresponding to the two topological points, the preset distance threshold is the second distance, and based on the first distance recorded by the inertial odometer between the detected beacon and the detected previous adjacent beacon, determining whether the detected beacon is the same as the detected previous adjacent beacon includes:

when the first distance is not equal to the preset distance threshold, determining that there is a false detection for the detected beacon.

In an embodiment, a planned path set formed by all paths in the planned path is a subset of a movement path set through which the mobile robot moves during the moving, and the mobile robot moves at least once according to each of the paths in the planned path set, collecting the data from the sensor in the mobile robot during the moving includes: collecting the data from the sensor at a preset first sampling frequency during the moving, and performing the mark detection by the mobile robot includes: obtaining beacons and detecting the beacons in parallel by the mobile robot in a moving state at a preset second sampling frequency, such that the moving state is not interrupted, where the preset first sampling frequency and the preset second sampling frequency are related to a current moving rate of the mobile robot.

According to a second aspect of the present disclosure, there is provided a method for constructing a map, including: constructing a map by using data for constructing a mobile robot map, where the data for constructing the mobile robot map is collected according to the method for collecting the data for constructing the mobile robot map of the first aspect.

In an embodiment, constructing the map by using the data for constructing the mobile robot map includes: synchronizing the collected data from the sensor in the mobile robot; processing collected image data to obtain key frames; performing overall optimization based on the key frames to obtain overall map information; and converting the overall map information into a map format.

According to a third aspect of the present disclosure, there is provided an apparatus for collecting data for constructing a mobile robot map, including: a target key node obtaining module, configured to obtain a target key node; a movement control module, configured to control a process of moving of a mobile robot towards a target key node; and a collection module, configured to: collect data from a sensor in the mobile robot during the moving, where the target key node is determined according to topological information, the topological information includes logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence; and determine a direction of the moving by using the guide marks during the moving, and determine a to-be-reached target key node by using the beacons without pose information of any of the key nodes and pose information of any of the beacons.

In an embodiment, the topological information further includes beacons corresponding to the topological points, and the target key node obtaining module is configured to: obtain a beacon of the target key node from map construction software, where the target key node is determined by the map construction software according to a planned path, the topological information and a topological point corresponding to a current key node reached by the mobile robot.

In an embodiment, the movement control module includes a mark detection submodule and a movement control submodule. The mark detection submodule is configured to: perform a mark detection by the mobile robot. The movement control submodule is configured: when a guide marker is detected, move according to the detected guide marker, when a beacon is detected, match the detected beacon with a beacon of a current target key node from the map construction software, when the matching is successful, determine that the mobile robot has reached the current target key node, and request a next target key node from the map construction software, such that the map construction software sends a beacon of the next target key node to the mobile robot; or send the detected beacon to the map construction software, such that the map construction software matches the detected beacon with the beacons corresponding to the topological points in the topological information, and when the matching is successful, obtain a topological point corresponding to the detected beacon, and send a beacon corresponding to a next topological point as the beacon of the next target key node to the mobile robot; where different beacons have different marking contents.

In an embodiment, the target key node obtaining module is configured to: obtain the topological information and a planned path from map construction software; and based on the planned path, the topological information, and a topological point corresponding to a current key node reached by the mobile robot, determine, by the mobile robot, a target topological point, and determining a key node corresponding to the target topological point as the target key node.

In an embodiment, the topological information further includes beacons corresponding to the topological points, and the movement control module includes a mark detection submodule, configured to: perform a mark detection by the mobile robot, when a guide marker is detected, move according to the detected guide marker, when a beacon is detected, match the detected beacon with the beacons corresponding to the topological points in the topological information, and when the matching is successful, determine that the mobile robot has reached the current target key node, and obtain a next target key node; where different beacons have different marking contents.

In an embodiment, the target key node obtaining module is configured to: obtain the topological information and a planned path from map construction software; and based on the planned path, the topological information, and a topological point corresponding to a current key node reached by the mobile robot, determine, by the mobile robot, a target topological point, and determining a key node corresponding to the target topological point as the target key node.

In an embodiment, the movement control module includes a mark detection submodule, configured to: perform a mark detection, when a guide marker is detected, move according to the detected guide marker, when a beacon is detected, based on a first distance recorded by an inertial odometer between the detected beacon and a detected previous adjacent beacon, determine whether the detected beacon is the same as the detected previous adjacent beacon, when the first distance is equal to a preset distance threshold, determine that the detected beacon is not the same as the detected previous adjacent beacon, and based on matching between an order of the detected beacon and the detected previous adjacent beacon and an order of adjacent topological points in the planned path, determine a topological point corresponding to the detected beacon, and obtain a next target key node; where different beacons have the same marking content.

In an embodiment, the topological information further includes a second distance between two topological points with logical connection relationship, and the second distance is a measured distance between two key nodes respectively corresponding to the two topological points, the preset distance threshold is the second distance, and the mark detection submodule is further configured: when the first distance is not equal to the preset distance threshold, determine that there is a false detection for the detected beacon.

In an embodiment, a planned path set formed by all paths in the planned path is a subset of a movement path set through which the mobile robot moves during the moving, and the mobile robot moves at least once according to each of the paths in the planned path set. The collection module is configured to collect the data from the sensor at a preset first sampling frequency during the moving. The mark detection submodule is configured to obtain beacons and detecting the beacons in parallel by the mobile robot in a moving state at a preset second sampling frequency, such that the moving state is not interrupted. The preset first sampling frequency and the preset second sampling frequency are related to a current moving rate of the mobile robot.

According to a fourth aspect of the present disclosure, there is provided a system for constructing a map, including: the apparatus for collecting the data for constructing the mobile robot map of the third aspect; and an apparatus for constructing a map, configured to construct a map by using the data for constructing the mobile robot map.

In an embodiment, the apparatus for constructing the map includes: a synchronization module, configured to synchronize the collected data from the sensor in the mobile robot; a tracking module, configured to process collected image data to obtain key frames; an optimization module, configured to perform overall optimization based on the key frames to obtain overall map information; and a map generation module, configured to convert the overall map information into a map format.

According to a fifth aspect of the present disclosure, there is provided a mobile robot, including: the apparatus for collecting the data for constructing the mobile robot map of the third aspect, and/or the system for constructing the map of the fourth aspect.

According to a sixth aspect of the present disclosure, there is provided a computer-readable storage medium, storing computer programs thereon, where the computer programs, when executed by a processor, cause the processor to perform the method for collecting the data for constructing the mobile robot map of the first aspect, and/or the method for constructing the map of the second aspect.

The present disclosure provides a method for collecting data for constructing the mobile robot map. In the method, without the need to know the pose information of the key nodes and the pose information of the beacons, a direction of moving is determined by using a guidance marker, and a to-be-reached target key node is determined by using a beacon. the pose information of the key nodes and the pose information of the beacons are not used during movement, and the data for constructing the mobile robot map is collected during the movement towards the target key node. Because there is no need to measure the pose information of the key nodes and the pose information of the beacons in the moving process, the present disclosure can support map construction without measurement, such that the convenience and automation of collecting the data for constructing the mobile robot map in the moving process of the mobile robot are improved, and the efficiency of map construction is improved. the pose information of the key nodes and the pose information of the beacons are not used in the process of moving, so that the beacons can be flexibly configured, and can be well adapted to the actual scene. The distance between the beacons is unlimited and can be theoretically infinite, which is beneficial for reducing the number of beacons required in the preliminary stage, improves the efficiency of the preliminary preparation, and can support complex paths for map construction with a small amount of preliminary implementation. The moving process has nothing to do with the navigation coordinates for map construction, and there is no need to pay attention to the positioning results, so the moving path is flexible.

### BRIEF DESCRIPTION OF THE DRAWINGS

FIG. 1 is a flowchart illustrating a method for collecting data for constructing a mobile robot map according to an embodiment of the present disclosure.
FIG. 2 is a schematic diagram illustrating a scene arrangement and a topological map according to an embodiment of the present disclosure.
FIG. 3 is a flowchart illustrating a process of collecting data for constructing a mobile robot map by the mobile robot according to an embodiment of the present disclosure.
FIG. 4 is a flowchart illustrating a process of collecting data for constructing a mobile robot map by the mobile robot according to another embodiment of the present disclosure.
FIG. 5 is a flowchart illustrating a process of constructing a map by the map construction software according to an embodiment 1 of the present disclosure.
FIG. 6 is a schematic diagram illustrating a scene arrangement and a topological map according to an embodiment 2 of the present disclosure.
FIG. 7 is a flowchart illustrating a process of moving towards a target key node in patrol route manner according to the embodiment 2 of the present disclosure.
FIG. 8 is a flowchart illustrating a process of constructing a map by the map construction software according to the embodiment 2 of the present disclosure.
FIG. 9 is a schematic diagram illustrating an apparatus for collecting data for constructing a mobile robot map according to an embodiment of the present disclosure.
FIG. 10 is a schematic diagram illustrating a system for constructing a map according to an embodiment of the present disclosure.
FIG. 11 is a schematic diagram illustrating an apparatus for collecting data for constructing a mobile robot map, a system for constructing a map or a mobile robot according to an embodiment of the present disclosure.

### DETAILED DESCRIPTION OF THE EMBODIMENTS

To make the objects, technical solutions and advantages of the present disclosure clearer, the present disclosure will be further described in details in combination with accompanying drawings and examples.

The present disclosure provides a method for collecting data for constructing the mobile robot map. In the method, the data is collected by using a sensor in the mobile robot during the moving process of the mobile robot towards a target key node, and during the moving process, a direction of moving is determined by using a guidance marker, and a to-be-reached target key node is determined by using a beacon, without the pose information of any of the key nodes and the pose information of any of the beacons.

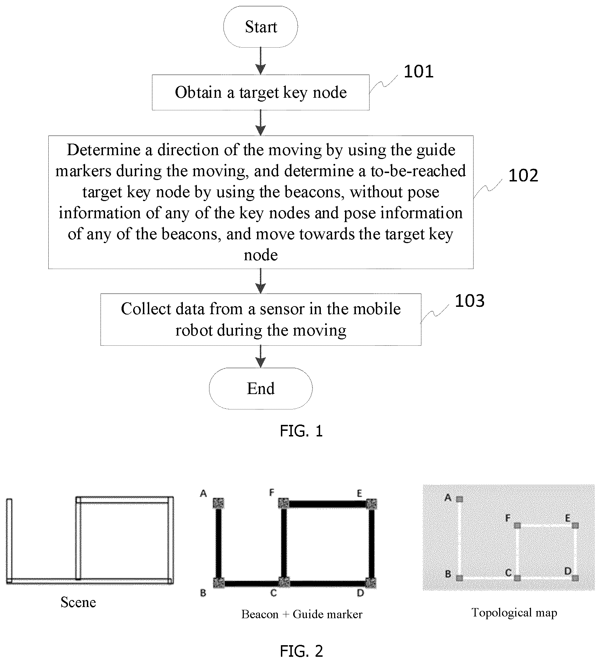

FIG. 1 is a flowchart illustrating a method for collecting data for constructing a mobile robot map according to an embodiment of the present disclosure. The method is performed by a mobile robot. As shown in FIG. 1, the method includes the following steps 101 to 103.

At step 101, a target key node is obtained.
the target key node is determined according to a planned path and topological information, the topological information includes logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence.

At step 102, a direction of the moving is determined by using the guide markers during the moving, and a to-be-reached target key node is determined by using the beacons, without pose information of any of the key nodes and pose information of any of the beacons, and the mobile robot moves towards the target key node.

At step 103, data from a sensor in the mobile robot is collected during the moving. during the process of collecting, the mobile robot collects the data from the sensor in the mobile robot according to a preset first sampling frequency, where the first sampling frequency is related to a current moving rate of the mobile robot.

The present disclosure improves the automation degree of collecting the data for constructing the mobile robot map, and can support non-measurement mapping.

To facilitate the understanding of the present disclosure, the following description will be combined with the collected data of the sensor under specific collection manner and the map construction by using the collected data of the sensor.

### Embodiment 1

The embodiment 1 is based on constructing a downward-looking (top view) visual texture map by using marking information having different marking contents as beacons and guide markers as a patrol route. The downward-looking visual texture map is a map mainly including ground visual feature information and relative positional relationship thereof, and is mainly used for downward-looking visual navigation of a mobile robot. Since the main feature information of the map consists of the texture of the ground itself, the map is called a texture map.

First, the preliminary preparation is performed as following.

In this embodiment, there are existing paths in the actual scene, and the topological map is drawn based on the existing paths by using the map construction software, and the planned path is generated based on the topological map. The topological map includes logical relative position relationships between topological points, and logical connection relationships between the topological points.

The topological points and the key nodes in the actual scene are in one-to-one correspondence, and beacons with different marking contents are arranged on the ground at the key nodes, e.g., quick response (QR) code beacons, or one of a character, a number, an icon, or any combination thereof, and the beacons at the key nodes are different from each other. The beacons corresponding to the topological points, the logical relative position relationships between the topological points, and the logical connection relationships between the topological points are stored as attributes of the topological map in the topological map. According to the logical connection relationships between the topological points in the topological map, a color band or elastic line is applied between the key nodes as a guide marker, and the guide markers respectively correspond to the logical connection relationships between the topological points in the topological map. As an exception, if the distance between the key nodes is less than a preset distance threshold, the guide markers may not be provided.

There is no overall pose information of the key node and no overall pose information of the beacons at the key nodes, i.e., there is no need to manually measure the pose information of the key nodes as well as the pose information of the beacons.

FIG. 2 is a schematic diagram illustrating a scene arrangement and a topological map according to an embodiment of the present disclosure. In FIG. 2, the left figure shows the existing paths in the actual scene, the middle figure shows the arranged QR code and the guide markers, and the right figure shows the drawn the topological map. The topological map is presented as a visualization of the logical relative positional relationships between the topological points, and the logical connection relationships between the topological points, and is not an equally scaled image corresponding to the position and length of the existing paths and the position of the key nodes in the actual scene, but is rather a logical correspondence. For example, in the actual scene, there is an existing path between the key node A and the key node B. The existing path is not strictly required to be a straight line segment when arranging the guide marker between the above two key nodes, but can be an arc with curvature or a line that facilitates the moving of the mobile robot. For another example, the key nodes A, E, and F are at the same horizontal level in the actual scene, but they can be not at the same horizontal level in the topological map. It will be understood that a topological map is topological information in terms of computer program processing.

The mobile robot then collects the data for constructing the mobile robot map.

Mode 1: the mobile robot is controlled to move by the map construction software so as to facilitate the collection of the data of the sensor during the moving process, where the moving path include at least the planned path. That is, the moving path through which the mobile robot moves may be more than the planned path as long as each path in the planned path is traversed at least once, and thus a planned path set formed by all paths in the planned path is a subset of a movement path set through which the mobile robot moves during the moving process.

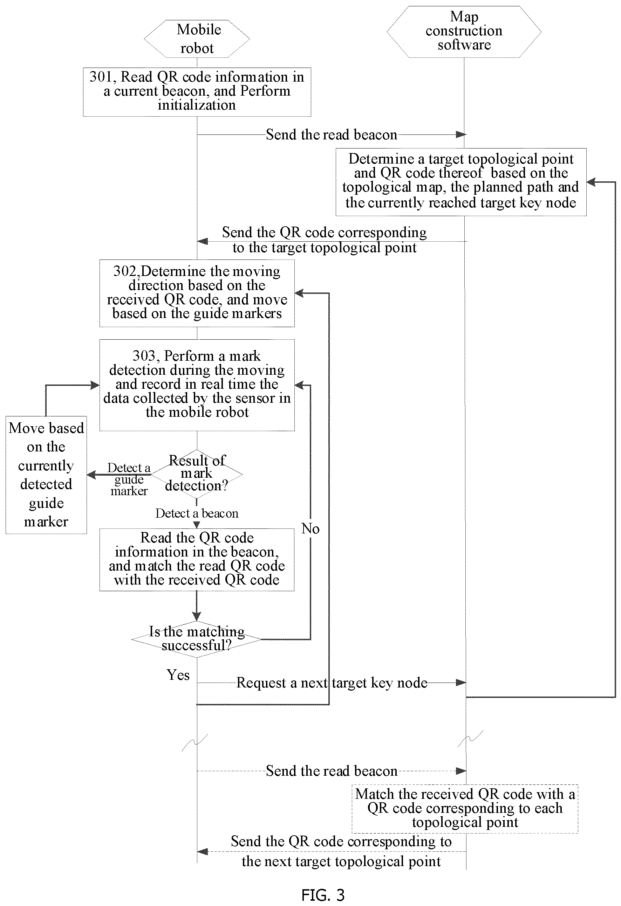

FIG. 3 is a flowchart illustrating a process of collecting data for constructing a mobile robot map by the mobile robot according to an embodiment of the present disclosure. Illustrated by the example of a beacon being a QR code, the mobile robot the mobile robot performs the following steps 401 to 404 from a key node.

At step 301, the mobile robot reads QR code information in a current beacon, the mobile robot is initialized, and the mobile robot sends the current beacon to the map construction software so that the map construction software takes a topological point corresponding to the current beacon as a starting point.

At step 302, the mobile robot receives a QR code corresponding to a target topological point determined by the map construction software according to the topological map, the planned path and the currently reached target key node, where the target topological point corresponds to the next target key node adjacent to the currently reached target key node, and the key node where the QR code is located is the next target key node, and the current beacon read by the mobile robot is the beacon at the target key node which the mobile robot currently reaches when the mobile robot is initialized.

The mobile robot determines the guide marker of the direction of the next target key node according to the received QR code, takes the direction of the guide marker as the current moving direction of the mobile robot, and moves according to the guide markers. Alternatively, the mobile robot selects a guide marker in the direction of the received QRcode

(i.e., the next target key node) from the guide markers, takes the direction of the selected guide marker as the current moving direction of the mobile robot, and moves according to the guide marker. For example, in FIG. 2, at the point C, if the target topology point is the point F, the mobile robot moves according to the line segment CF, and if the target topology point is the point D, the mobile robot moves according to the line segment CD.

At step 303, the mobile robot performs a mark detection during the moving and records in real time the data collected by the sensor in the mobile robot.

When a guide marker is detected, the mobile robot moves in accordance with the currently detected guide marker, so that the correct orientation can be ensured by the guide marker.

When a beacon is detected, the mobile robot reads the QR code information in the beacon, matches the read QR code with the received QR code. If the matching is successful, it is determined that the mobile robot has reached the target key node, and the mobile robot requests the next target key node from the map construction software, and returns to step 302 until all paths in the planned path are traversed at least once. If the matching is a failure, it is determined that the mobile robot has not reached the target key node, and the mobile robot moves according to the guide marker, and returns to step 303 until all paths in the planned path are traversed at least once.

In another mode of step 303, after the mobile robot reads the QR code in the beacon, the mobile robot sends the read QR code to the map construction software, so that the map construction software matches the received QR code with a QR code corresponding to each of the topological points. If the matching is successful, it is determined that the mobile robot has reached the target key node, and the map construction software sends a beacon corresponding to a next target topological point to the mobile robot, so that the key node in which the beacon is located is used as the target key node. If the matching is a failure, it is determined that the mobile robot has not reached the target key node, and the map construction software instructs the mobile robot to move in accordance with the guide markers. When the mobile robot receives the beacon corresponding to the next target topological point, it returns to step 302, and when the mobile robot receives the instruction to move in accordance with the guide markers, it returns to step 303 until all paths in the planned path are traversed.

In the above-described process of performing the mark detection, when the mobile robot reads the beacon, the mobile robot does not interrupt the current movement, and obtains the beacon image in parallel according to the preset second sampling frequency while maintaining the current moving state, so that the mobile robot does not need to stop to obtain the beacon image, which is conducive to improving the efficiency of map construction. The preset second sampling frequency are related to a current moving rate of the mobile robot.

Mode 2: the mobile robot moves according to the planned path as well as the topological map.

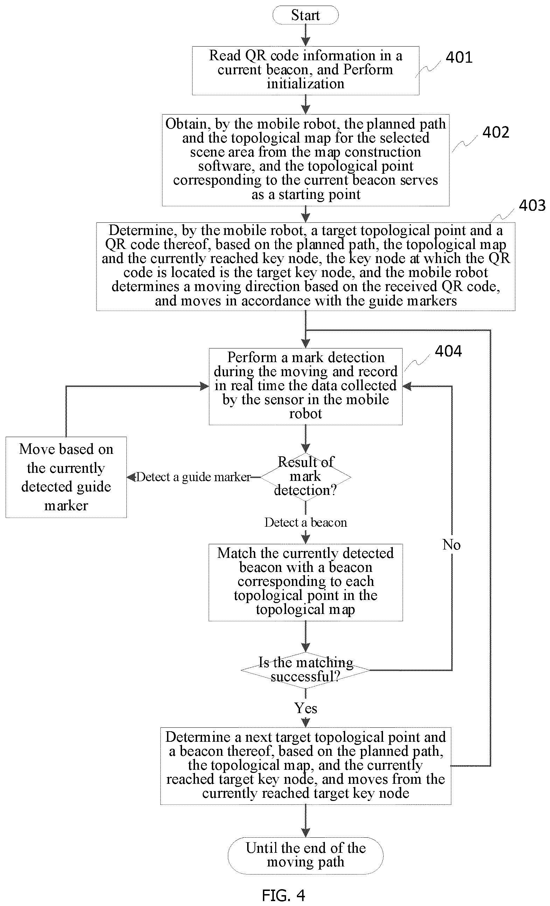

FIG. 4 is a flowchart illustrating a process of collecting data for constructing a mobile robot map by the mobile robot according to another embodiment of the present disclosure. Illustrated by the example of a beacon being a QR code, the mobile robot starts the following steps 401 to 404 from a key node.

At step 401, the mobile robot reads QR code information in a current beacon, and the mobile robot is initialized.

At step 402, the mobile robot obtains the planned path and the topological map for the selected scene area from the map construction software, and the topological point corresponding to the current beacon serves as a starting point.

At step 403, the mobile robot determines a target topological point and a QR code corresponding to the target topological point, based on the planned path, the topological map and the currently reached key node, the key node at which the QR code is located is the target key node, and the mobile robot determines a moving direction based on the received QR code, and moves in accordance with the guide markers.

At step 404, the mobile robot performs a mark detection during the moving and records in real time the data collected by the sensor in the mobile robot.

When a guide marker is detected, the mobile robot moves in accordance with the currently detected guide marker, so that the correct orientation can be ensured by the guide marker.

When a beacon is detected, the mobile robot matches the detected beacon with a beacon corresponding to each topological point in the topological map. If the matching is successful, it is determined that the mobile robot has reached the target key node, and the mobile robot determines a next target topological point and a beacon corresponding to the next target topological point, based on the planned path, the topological map, and the currently reached target key node, and moves from the currently reached target key node, and it returns to step 404 until all paths in the planned path are traversed at least once. If the matching is a failure, it is determined that the mobile robot has not reached the target key node, and the mobile robot moves according to the guide markers, and returns to step 404 until all paths in the planned path are traversed.

In the moving process, in order to improve the efficiency of data collection, the mobile robot can move towards the target key node according to the guide marker, without feedback by means of the pose information of the key node and of the beacon, so that the distance between the beacons can be unlimited, thus the number of required beacons is reduced and the efficiency is improved. Also, the beacons can be flexibly configured, which improves the convenience of map construction. In addition, the mobile robot can move through the moving path according to the scene situation and the requirements of data collection, and it is not necessary to stick to the planned path, as long as the planned path is a subset of the moving path set. For example, in FIG. 2, the moving path can be ABCDEFC, ABCFEDC, EDCFCBA, CBAABCFEDC, etc., as long as the moving path includes AB path, BC path, CD path, ED path, EF path and FC path. Thus, the moving path can be independent of the navigation coordinates for map construction, and the moving path is flexible without paying attention to the positioning results in the moving process.

The data collected by the sensor includes at least a downward-looking ground texture image and identification information of the beacons. Inertial navigation sensor data may be also included.

Finally, based on the collected data, map construction is performed by using the map construction software.

The mobile robot transmits the collected data to the map construction software, so that the map construction software can construction a map based on the collected data.

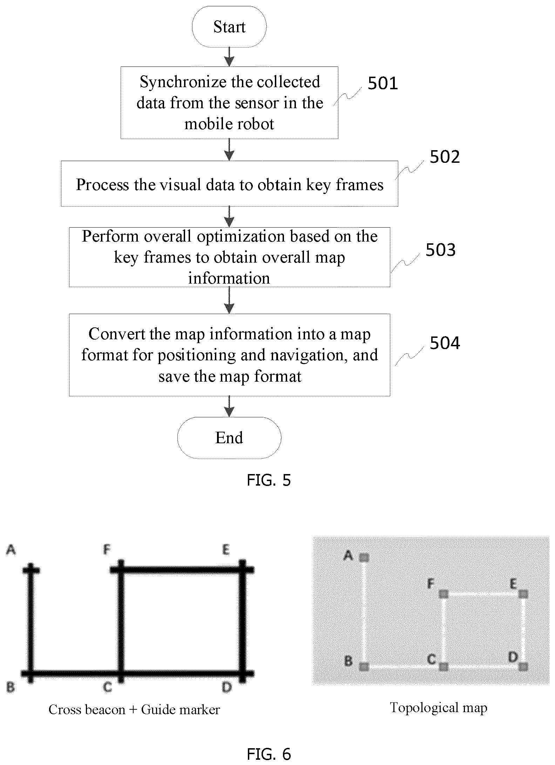

FIG. 5 is a flowchart illustrating a process of constructing a map by the map construction software according to an embodiment 1 of the present disclosure. As shown in FIG. 5, the method includes the following steps 501 to 504.

At step 501, the collected data from the sensor in the mobile robot is synchronized.

Given the different timestamps of the data collected by the sensor in the mobile robot, the data collected by the sensor in the mobile robot is aligned.

In this embodiment, the collected data includes: visual data from an image collection device, e.g., a downward looking ground texture image; and inertial data from an inertial sensor, e.g., wheeled odometer data.

At step 502, the visual data is processed to obtain key frames for subsequent optimization.

Where the processing includes: data preprocessing, feature extraction, matching and pose calculation, key frame screening, etc.

At step 503, overall optimization is performed based on the key frames to obtain overall map information.

In this step, an optimization problem can be constructed, and the overall optimization can be performed based on the constructed optimization problem.

The optimization problem can be defined by a state variable and a constraint relationship for the state variable. In this embodiment, the state variable includes visual frames, and overall beacons. The constraint may include: odometer constraint, visual matching constraint, loopback constraint, and visual-beacon observation constraint. The initial value of the optimization state variable can be given by the key frames or recalculated based on the constraint relationship before optimization.

The overall optimization can be solved by iteratively solving nonlinear least squares (e.g., the LM algorithm).

After the optimization is completed, the overall consistent map information can be obtained.

At step 504, the map information is converted into a map format for positioning and navigation, and the map format is saved to finally complete the generation of the map.

### Embodiment 2

This embodiment 2 is based on constructing a visual laser combination map by using the downward-looking (top view) visual texture and laser data with the marking information having the same marking content as beacons and with the guide markers as a patrol route.

First, the preliminary preparation is performed as following:

In this embodiment, there is no existing path in the actual scene, for example, a localized open area in the scene, and the map construction software is used to draw a topological map in accordance with the needs of constructing a map, where the topological map includes logical relative position relationships between topological points, and logical connection relationships between the topological points.

According to the logical relative position relationships between the topological points, key nodes are provided in the actual scene, and beacons are provided at the key nodes, where each of the beacons has marking information with the same marking content. The beacons may be cross beacons, beige beacons, and so on. There is no overall pose information of the key node and no overall pose information of the beacons at the key nodes, i.e., there is no need to manually measure the pose information of the key nodes as well as the pose information of the beacons.

According to the logical connection relationships between the topological points, in the actual scene, a color band or elastic line is applied between the key nodes as a guide marker, and the guide markers respectively correspond to the logical connection relationships between the topological points in the topological map. As an exception, if the distance between the key nodes is less than a preset distance threshold, the guide markers may not be provided.

The logical relative positional relationships and the logical connection relationships between the topological points in the topological map are stored in the topological map as attributes of the topological map.

FIG. 6 is a schematic diagram illustrating a scene arrangement and a topological map according to an embodiment 2 of the present disclosure. As shown in FIG. 6, the left figure shows the arranged cross beacons and guide markers, and the right figure shows the drawn topological map. The topological map is presented as a visualization of the logical relative positional relationships between the topological points, and the logical connection relationships between the topological points, and is not an equally scaled image corresponding to the paths and the key nodes in the actual scene, but is rather a logical correspondence. For example, in the actual scene, the path is not strictly required to be a straight line segment when arranging the guide marker between the two key nodes A and B, but can be an arc with curvature or a line that facilitates the moving of the mobile robot.

The map construction software is utilized to generate a planned path based on the topological map, and the topological map and the planned path are sent to the mobile robot, where the planned path is a set of directed paths composed of the topological points in the topological map.

The mobile robot determines the target key node according to the topological map and moves towards the target key node in patrol route manner.

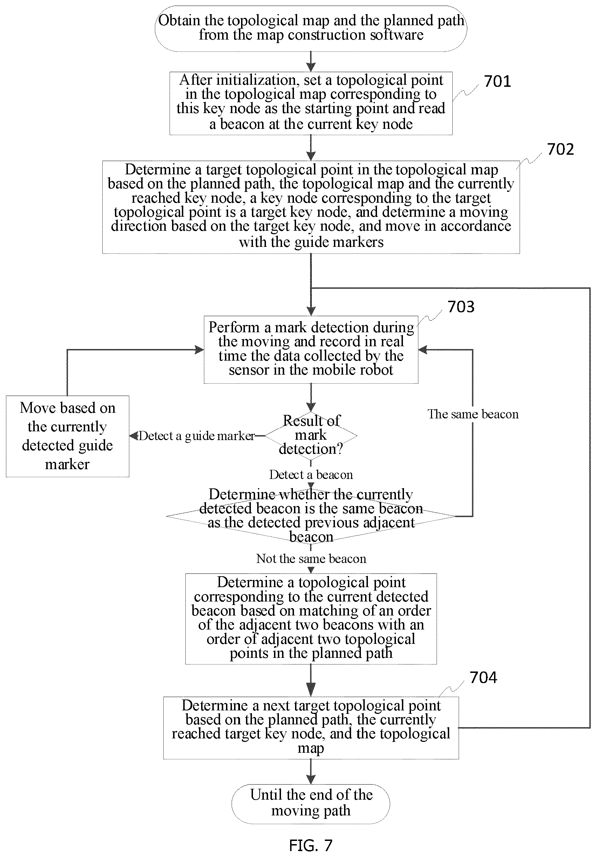

FIG. 7 is a flowchart illustrating a process of moving towards a target key node in patrol route manner according to the embodiment 2 of the present disclosure. As shown in FIG. 7, the specific process includes the following steps 701 to 704.

The mobile robot obtains the topological map and the planned path from the map construction software, and starts the following steps 701 to 704 at a key node.

At step 701, after initialization, the mobile robot sets a topological point in the topological map corresponding to this key node as the starting point and reads a beacon at the current key node.

At step 702, the mobile robot determines a target topological point in the topological map based on the planned path, the topological map and the currently reached key node, a key node corresponding to the target topological point is a target key node, and the mobile robot determines a moving direction based on the target key node, and moves in accordance with the guide markers.

For example, in FIG. 6, at the point C, if the target topology point is the point F, the mobile robot moves according to the line segment CF, and if the target topology point is the point D, the mobile robot moves according to the line segment CD.

At step 703, the mobile robot performs a mark detection during the moving and records in real time the data collected by the sensor in the mobile robot.

When a guide marker is detected, the mobile robot moves in accordance with the currently detected guide marker, so that the correct orientation can be ensured by the guide marker.

When a beacon is detected, based on a first distance recorded by an inertial odometer between the current key node and the previous adjacent key node (i.e., the first distance between the detected beacon and the detected previous adjacent beacon), it is to determine whether the detected beacon is the same as the detected previous adjacent beacon.

If the first distance is equal to a preset distance threshold, it is determined that the currently detected beacon and the detected previous adjacent beacon are different, which indicates that the mobile robot has moved to the next key node, and determines a topological point corresponding to the current detected beacon based on matching of an order of the adjacent two beacons with an order of adjacent two topological points in the planned path. For example, in the figures, the planned path is: ABCDEFC. The mobile robot starts from the key node A, and when the mobile robot moves to the key node B according to the guide markers, the order of the adjacent two beacons is AB, and according to the order of AB in the planned path, the topological point corresponding to the beacon B can be determined, and step 704 is performed; otherwise, it is determined that the currently detected beacon and the detected previous adjacent beacon are the same beacon, which indicates that the mobile robot has not moved to the next key node, and it is returned to the step 703.

To avoid situations where the feature of the beacon duplicates the existing features on the ground, leading to a false detection for the beacon, for example, when the beacon is a cross beacon, misidentifying the cross seam of the tiles on the ground as the cross beacon can result in incorrect correspondence between the cross beacon and the topological point in the topological map.

In response to the situation where the false detection is likely to occur, in addition to selecting a feature for the beacon that is different from that of the ground, such as a meter feature, a second distance may be provided between any two topological points in the topological map. The second distance is a measured distance between the beacons at the two key nodes corresponding to the two topological points, and preferably, the two topological points are two topological points that have a logical connection relationship.

**In** this way, the second distance can serve as the distance threshold, and if the first distance is not equal to the second distance between the two topological points in the topological map, it can be determined that there is a false detection for the current beacon, whereby the false detection for beacon can be eliminated by a distance verification.

At step 704, the mobile robot determines a next target topological point based on the planned path, the currently reached target key node, and the topological map, and then returns to step 703 until all paths in the planned path are traversed at least once. The moving path through which the mobile robot moves includes at least the planned path, that is, the planned path is a subset of the moving path set through which the mobile robot moves.

**In** the moving process, in order to improve the efficiency of data collection, the mobile robot can move towards the target topological point according to the guide marker, without feedback by means of the pose information of the key node and of the beacon, so that the distance between the beacons can be unlimited, thus the number of required beacons is reduced and the efficiency is improved. In addition, the mobile robot can move through the moving path according to the scene situation and the requirements of data collection, and it is not necessary to stick to the planned path, as long as the planned path is a subset of the moving path set. For example, in FIG. 6, the moving path can be ABCDEFC, ABCFEDC, EDCFCBA, CBAABCFEDC, etc., as long as the moving path includes AB path, BC path, CD path, ED path, EF path and FC path. Thus, the moving path can be independent of the navigation coordinates for map construction, and the moving path is flexible without paying attention to the positioning results in the moving process.

In this embodiment, the data collected by the sensor includes at least a downward-looking ground texture image, inertial navigation sensor data, and laser data.

Finally, based on the collected data, map construction is performed by using the map construction software.

The mobile robot transmits the collected data to the map construction software, so that the map construction software can construction a map based on the collected data.

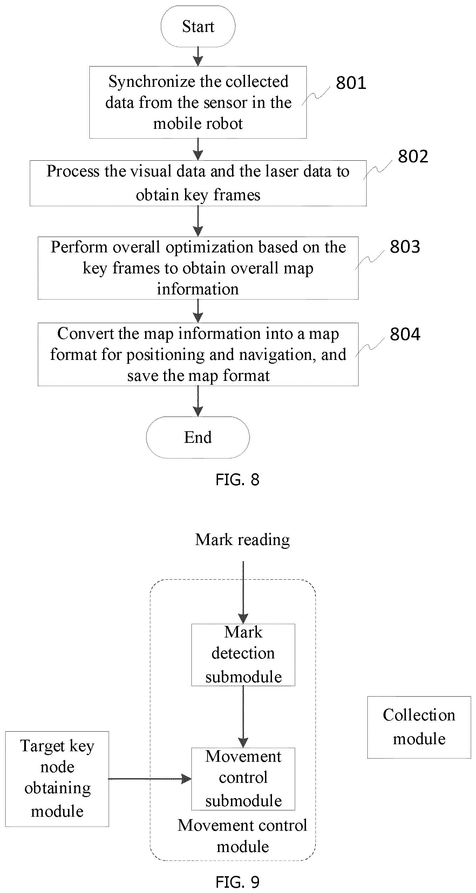

FIG. 8 is a flowchart illustrating a process of constructing a map by the map construction software according to the embodiment 2 of the present disclosure. As shown in FIG. 8, the method includes the following steps 801 to 804.

At step 801, the collected data from the sensor in the mobile robot is synchronized.

Given the different timestamps of the data collected by the sensor in the mobile robot, the data collected by the sensor is aligned.

In this embodiment, the collected data includes: visual data from an image collection device, e.g., a downward looking ground texture image; and inertial data from an inertial sensor, e.g., inertial odometer data; laser data from a LIDAR sensor.

At step 802, the visual data and the laser data is processed to obtain key frames for subsequent optimization.

Where the processing includes: data preprocessing, feature extraction, matching and pose calculation, key frame screening, etc.

At step 803, overall optimization is performed based on the key frames to obtain overall map information.

In this step, an optimization problem can be constructed, and the overall optimization can be performed based on the constructed optimization problem.

The optimization problem can be defined by state variables and constraint relationships of the state variables. In this embodiment, the state variable includes visual frames, laser frames and overall beacons. The constraint may include: odometer constraint, visual matching constraint, loopback constraint, and visual-beacon observation constraint, laser matching constraint, and visual laser association constraint. The initial value of the optimization state variable can be given by the key frames or recalculated based on the constraint relationship before optimization.

The overall optimization can be solved by iteratively solving nonlinear least squares (e.g., the LM algorithm).

After the optimization is completed, the overall consistent map information can be obtained.

At step 804, the map information is converted into a map format for positioning and navigation, and saved to finally complete the generation of the map.

In the embodiments 1 and 2 of the present disclosure, the time for constructing the map can be after all the data are collected, or the map can be constructed while the collected data is received. According to different requirements and information recorded by the sensor, the constructed map can be a visual map, a laser map or a visual-laser combination map. The disclosure does not specifically limit the method for constructing the map, and the map construction can be performed based on an optimized simultaneous localization and mapping (SLAM) method. The map construction software can run on a personal computer (PC), a server or a mobile robot.

FIG. 9 is a schematic diagram illustrating an apparatus for collecting data for constructing a mobile robot map according to an embodiment of the present disclosure. As shown in FIG. 9, the apparatus includes a target key node obtaining module, a movement control module, and a collection module.

The target key node obtaining module is configured to obtain a target key node.

The movement control module is configured to control a process of moving of a mobile robot towards the target key node.

The collection module is configured to collect data from a sensor in the mobile robot during the moving.

The target key node is determined at least according to topological information, the topological information includes logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence.

A direction of the moving is determined by using the guiding markers during the moving, and a to-be-reached target key node is determined by using the beacons, without pose information of any of the key nodes and pose information of any of the beacons.

The movement control module includes a mark detection submodule and a movement control submodule.

The mark detection submodule is configured to: perform a mark detection during the moving process; when a guide marker is detected, send a movement instruction to the movement control submodule; and when a beacon is detected, send a request instruction to the target key node obtaining module.

The movement control submodule is configured to move according to the movement instruction from the mark detection submodule, and the target key node information from the target key node obtaining module.

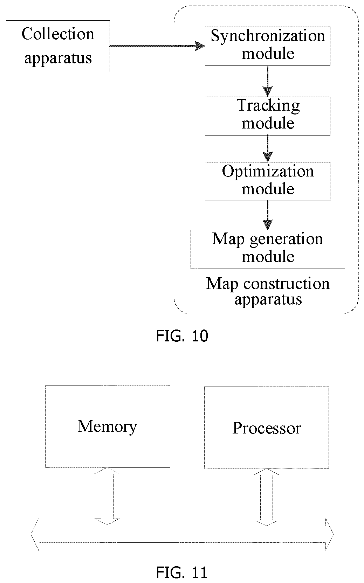

FIG. 10 is a schematic diagram illustrating a system for constructing a map according to an embodiment of the present disclosure. As shown in FIG. 10, the system includes a collection apparatus, and a map construction apparatus.

The collection apparatus is configured to collect data for constructing a mobile robot map.

The map construction apparatus is configured to construct a map by using the data for constructing the mobile robot map.

The map construction apparatus includes a synchronization module, a tracking module, an optimization module, and a map generation module.

The synchronization module is configured to synchronize the collected data from the sensor in the mobile robot.

The tracking module is configured to process collected image data to obtain key frames.

The optimization module, configured to perform overall optimization based on the key frames to obtain overall map information.

The map generation module is configured to convert the overall map information into a map format.

FIG. 11 is a schematic diagram illustrating an apparatus for collecting data for constructing a mobile robot map, a system for constructing a map or a mobile robot according to an embodiment of the present disclosure. As shown in FIG. 11, a memory and a processor are included. The memory stores computer programs, where the computer programs, when executed by the processor, cause the processor to perform the method for collecting the data for constructing the mobile robot map, and/or the method for constructing the map.

The memory may include a random access memory (RAM) or a non-volatile memory (NVM), such as at least one disk memory. Optionally, the memory may also be at least one storage device located away from the processor.

The processor can be a general processor, including a central processing unit (CPU), a network processor (NP) and so on. The processor can also be a digital signal processing (DSP), an application specific integrated circuit (ASIC), a field-programmable gate array (FPGA) or other programmable logic devices, a discrete gate or a transistor logic device, and a discrete hardware component.

The present disclosure provides a computer-readable storage medium, storing computer programs thereon, where the computer programs, when executed by a processor, cause the processor to perform the method for collecting the data for constructing the mobile robot map, and/or the method for constructing the map.

As for the apparatus/network side device/storage medium embodiments, since they are basically similar to the method embodiments, they are described relatively briefly, and for the relevant parts, reference can be made to the description of the method embodiments.

It will be noted that the relational terms such as "first" and "second" used herein are merely intended to distinguish one entity or operation from another entity or operation rather than to require or imply any such actual relation or order existing between these entities or operations. Further, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above description is only preferred examples of the present disclosure, and is not intended to limit the disclosure, and any modifications, equivalents, improvements, etc., which are made within the spirit and principles of the present disclosure, should be included scope of the present disclosure.

## Claims

1. A method for collecting data for constructing a mobile robot map, performed by a mobile robot, and comprising:
obtaining a target key node,
moving towards the target key node,
collecting data from a sensor in the mobile robot during the moving,
wherein the target key node is determined according to topological information, the topological information comprises logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence; and
determining a direction of the moving by using the guide markers during the moving, and determining a to-be-reached target key node by using the beacons, without pose information of any of the key nodes and pose information of any of the beacons.

2. The method of claim 1, wherein the topological information further comprises beacons corresponding to the topological points, and
obtaining the target key node comprises:
obtaining a beacon of the target key node from map construction software, wherein the target key node is determined by the map construction software according to a planned path, the topological information and a topological point corresponding to a current key node reached by the mobile robot.

3. The method of claim 2, wherein determining the direction of the moving by using the guide markers during the moving, and determining the to-be-reached target key node by using the beacons without the pose information of any of the key nodes and the pose information of any of the beacons comprise:
performing a mark detection by the mobile robot,
when a guide marker is detected, moving according to the detected guide marker,
when a beacon is detected,
matching the detected beacon with a beacon of a current target key node from the map construction software, when the matching is successful, determining that the mobile robot has reached the current target key node, and requesting a next target key node from the map construction software, such that the map construction software sends a beacon of the next target key node to the mobile robot; or
sending the detected beacon to the map construction software, such that the map construction software matches the detected beacon with the beacons corresponding to the topological points in the topological information, and when the matching is successful, obtaining a topological point corresponding to the detected beacon, and sending a beacon corresponding to a next topological point as the beacon of the next target key node to the mobile robot;
wherein different beacons have different marking contents.

4. The method of claim 1, further comprising: obtaining, by the mobile robot, the topological information and a planned path from map construction software;
wherein obtaining the target key node comprises:
based on the planned path, the topological information, and a topological point corresponding to a current key node reached by the mobile robot, determining, by the mobile robot, a target topological point, and determining a key node corresponding to the target topological point as the target key node.

5. The method of claim 4, wherein the topological information further comprises beacons corresponding to the topological points, and
determining the direction of the moving by using the guide markers during the moving, and determining the to-be-reached target key node by using the beacons without the pose information of any of the key nodes and the pose information of any of the beacons comprise:
performing a mark detection by the mobile robot,
when a guide marker is detected, moving according to the detected guide marker,
when a beacon is detected, matching the detected beacon with the beacons corresponding to the topological points in the topological information, and when the matching is successful, determining that the mobile robot has reached the current target key node, and obtaining a next target key node;
wherein different beacons have different marking contents.

6. The method of claim 4, wherein determining the direction of the moving by using the guide markers during the moving, and determining the to-be-reached target key node by using the beacons without the pose information of any of the key nodes and the pose information of any of the beacons comprise:
performing a mark detection by the mobile robot,
when a guide marker is detected, moving according to the detected guide marker,
when a beacon is detected, based on a first distance recorded by an inertial odometer between the detected beacon and a detected previous adjacent beacon, determining whether the detected beacon is the same as the detected previous adjacent beacon,
when the first distance is equal to a preset distance threshold, determining that the detected beacon is not the same as the detected previous adjacent beacon, and based on matching between an order of the detected beacon and the detected previous adjacent beacon and an order of adjacent topological points in the planned path, determining a topological point corresponding to the detected beacon, and obtaining a next target key node;
wherein different beacons have the same marking content.

7. The method of claim 6, wherein the topological information further comprises a second distance between two topological points with logical connection relationship, and the second distance is a measured distance between two key nodes respectively corresponding to the two topological points,
the preset distance threshold is the second distance, and
based on the first distance recorded by the inertial odometer between the detected beacon and the detected previous adjacent beacon, determining whether the detected beacon is the same as the detected previous adjacent beacon comprises:
when the first distance is not equal to the preset distance threshold, determining that there is a false detection for the detected beacon.

8. The method of any one of claims 3, 5, 6 and 7, wherein a planned path set formed by all paths in the planned path is a subset of a movement path set through which the mobile robot moves during the moving, and the mobile robot moves at least once according to each of the paths in the planned path set,
collecting the data from the sensor in the mobile robot during the moving comprises:
collecting the data from the sensor at a preset first sampling frequency during the moving, and
performing the mark detection by the mobile robot comprises:
obtaining beacons and detecting the beacons in parallel by the mobile robot in a moving state at a preset second sampling frequency, such that the moving state is not interrupted,
wherein the preset first sampling frequency and the preset second sampling frequency are related to a current moving rate of the mobile robot.

9. A method for constructing a map, comprising:
constructing a map by using data for constructing a mobile robot map,
wherein the data for constructing the mobile robot map is collected according to the method for collecting the data for constructing the mobile robot map of any one of claims 1 to 8.

10. The method of claim 9, wherein constructing the map by using the data for constructing the mobile robot map comprises:
synchronizing the collected data from the sensor in the mobile robot;
processing collected image data to obtain key frames;
performing overall optimization based on the key frames to obtain overall map information; and
converting the overall map information into a map format.

11. An apparatus for collecting data for constructing a mobile robot map, comprising:
a target key node obtaining module, configured to obtain a target key node;
a movement control module, configured to control a process of moving of a mobile robot towards the target key node; and
a collection module, configured to: collect data from a sensor in the mobile robot during the moving,
wherein the target key node is determined according to topological information, the topological information comprises logical relative position relationships and logical connection relationships between topological points, beacons are provided at key nodes in an actual scene, the topological points and the beacons at the key nodes in the actual scene are in one-to-one correspondence, and the logical connection relationships and guide markers connected between the key nodes are in one-to-one correspondence; and
determine a direction of the moving by using the guide markers during the moving, and determine a to-be-reached target key node by using the beacons, without pose information of any of the key nodes and pose information of any of the beacons.

12. A system for constructing a map, comprising:
the apparatus for collecting the data for constructing the mobile robot map of claim 11; and
an apparatus for constructing a map, configured to construct a map by using the data for constructing the mobile robot map.

13. The system of claim 12, wherein the apparatus for constructing the map comprises:
a synchronization module, configured to synchronize the collected data from the sensor in the mobile robot;
a tracking module, configured to process collected image data to obtain key frames;
an optimization module, configured to perform overall optimization based on the key frames to obtain overall map information; and
a map generation module, configured to convert the overall map information into a map format.

14. A mobile robot, comprising: the apparatus for collecting the data for constructing the mobile robot map of claim 11, and/or the system for constructing the map of any one of claims 12 to 13.

15. A computer-readable storage medium, storing computer programs thereon, wherein the computer programs, when executed by a processor, cause the processor to perform the method for collecting the data for constructing the mobile robot map of any one of claims 1 to 8, and/or the method for constructing the map of any one of claims 9 to 10.
